# EUROPÄISCHE PATENTSCHRIFT

(11) **EP 2 524 100 B1**
(45) Veröffentlichungstag und Bekanntmachung des Hinweises auf die Patenterteilung: **01.02.2017**
(21) Anmeldenummer: 10809134.9
(22) Anmeldetag: 10.12.2010
(51) Int. Cl.: E06B 9/262, B60J 1/20

(54) **STRUKTURELEMENT MIT EINER FÄCHERARTIG AUFFALTBAREN MATERIALLAGE**
STRUCTURAL ELEMENT WITH A FAN-LIKE OPENABLE MATERIAL LAYER
ELEMENT STRUCTURAL

(30) Priorität: 13.01.2010 DE 102010005066
(43) Veröffentlichungstag der Anmeldung: 21.11.2012
(73) Patentinhaber: Knauer, Dieter, 73240 Wendlingen (DE)
(72) Erfinder: Knauer, Dieter, 73240 Wendlingen (DE)
(74) Vertreter: Witte, Weller & Partner Patentanwälte mbB
(86) Internationale Anmeldenummer: PCT/DE2010/001446
(87) Internationale Veröffentlichungsnummer: WO 2011/085707

(56) Entgegenhaltungen:
- EP-A2- 0 227 247
- EP-A2- 2 524 100
- US-A- 5 333 665
- US-A1- 2008 093 032
- US-B1- 6 192 967
- US-B1- 7 048 027

## Beschreibung

Die Erfindung bezieht sich auf ein Strukturelement, das um ein Schwenkzentrum fächerartig auffaltbare und zufaltbare, längs Gelenkachsen miteinander klappbar verbundene Sektoren einer Materiallage aufweist.

Ein Strukturelement dieser Art ist bekannt (EP 1 090 204 B1). Es dient als Verschlusseinrichtung für Fenster-, Türen-, od. dgl. Öffnungen beliebiger Art, u.a. auch von Fahrzeugen und dort zur Abdeckung von Fahrzeugfenstern. Eine derartige Verschlusseinrichtung hat sich mit großem Vorteil bewährt.

Ein Strukturelement mit den im Oberbegriff des Anspruchs 1 genannten Merkmalen ist aus US7048027B1 bekannt.

Der Erfindung liegt die Aufgabe zugrunde, ein Strukturelement der eingangs genannten Art zu schaffen, das vielfältig einsetzbar ist.

Die Aufgabe ist bei einem Strukturelement der eingangs genannten Art gemäß der Erfindung durch die Merkmale im Anspruch 1 gelöst. Eine besonders vorteilhafte Ausführungsform ergibt sich dann, wenn die zweite Materiallage zu einem annähernd ebenen Flächenverlauf auffaltbar ist. Ein derartiges Strukturelement stellt im aufgefalteten oder aufgefächerten Zustand ein im wesentlichen biege- und knicksteifes Flächenelement dar, das auf einer Seite aufgrund der aufgefalteten ersten Materiallage einen etwa ziehharmonikaartig oder etwa zickzackförmig gestalteten Wandbereich hat und auf der anderen Seite, z. B. der Sichtseite, ein durch die zweite Materiallage im wesentlichen ebenflächiges Flächenelement mit annähernd ebenem Flächenverlauf ermöglicht. Diese etwa ebene Fläche ist zum einen leicht zu reinigen und kann zum anderen mit allen möglichen Text- und Bildinformation versehen werden, die direkt aufgedruckt, als bedruckte Folie aufgeklebt oder in sonstiger Weise aufgebracht werden. Auch kann diese Fläche farbig gestaltet sein. Sie eignet sich auch als Werbefläche und Werbeträger, z. B. für Firmenwerbung, für Werbung von Vereinen aller Art od. dgl., desweiteren auch zur Darstellung persönlicher Motive aller Art, z. B. aus den Bereichen Familie, Haustiere, persönliche Sportarten, Stimmungsbilder usw.. Diese ebene Fläche kam aber auch als Designelement gestaltet werden, das z. B. einem Fahrzeug als Träger eine ganz besondere, persönliche Note verleiht. Ferner kann diese zweite Materiallage generell als Trägerelement für alle möglichen Funktionsmittel verwendet werden, z. B. zum Aufbringen von Solarzellen, Leuchtelementen, Informationselementen, Reflexionselementen, LED- oder OLED-Elementen etc. Statt dessen oder zusätzlich kann die zweite Materiallage auch selbst als Funktionselement gestaltet sein, z. B. als Reflexionsfolie, Solarfolie, Projektionsfolie, Elektrolumineszenzfolie od. dgl. Das aus mindestens der ersten Materiallage und der zweiten Materiallage gebildete Strukturelement weist im aufgefalteten Zustand eine große Festigkeit auf und ist dadurch auch als Wandelement, z. B. Trennwandelement, als Duschwand, als Sichtschutz, z. B. für Terrasse und Balkon, auch als Verschlusseinrichtung für alle möglichen Öffnungen, als Vorhang, als Sonnenschutz, z B. Markise, Sonnenschirm, als Dachelement oder in sonstiger vielfacher Weise nutzbar. Je nach Einsatzgebiet wirkt sich zusätzlich als vorteilhaft die Tatsache aus, dass der zwischen den Materiallagen vorhandene Zwischenraum mit dem darin befindlichen Luftvolumen eine Schall- und Temperaturisolierung bewirken kann. Dadurch, dass die Materiallagen bei Nichtbedarf etwa ziehharmonikaartig zugefächert werden können, ergibt sich in diesem zugefalteten Zustand des Strukturelements ein solches, das einen geringen Platzbedarf hat und aufgrund der dann geringen Abmessungen leicht in vorhandenen Räumlichkeiten untergebracht werden kann. Da in diesem zugefächerten Zustand die zweite Materiallage etwa ziehharmonikaartig zugefaltet ist, ist diese, insbesondere deren Sichtfläche, dann besonders gut geschützt, wenn beim Zufalten die zweite Materiallage mit ihren Sektoren in vorteilhafter Weise zwischen den Sektoren der ersten Materiallage aufgenommen wird. Aufgrund der besonderen, guten Eigenschaften kann das Strukturelement u.a. auch mit Vorteil als Abdeckelement für Fensteröffnungen, Türöffnungen und hierbei z. B. solche eines Fahrzeugfensters, verwendet werden. Ferner kann das Strukturelement auch als flächiges, transparentes Scheibenelement anstelle einer Fensterscheibe, Türscheibe od. dgl. verwendet werden, mit welchem Gebäude, Fahrzeuge etc. bestückt werden. Bei allem ist das Strukturelement einfach und kostengünstig.

Dem äußeren Rand der Materiallagen kann mindestens ein angepasstes Führungselement, z. B. ein U-Profil oder ähnliches, zugeordnet sein, in das die Materiallagen beim Auffächern einlaufen und dann am Rand geführt und abgestützt sind. Aufgrund der hohen Belastbarkeit des Strukturelements quer zur Aufspannebene kann dieses Schutz- und Sperrelemente der verschiedensten Art bilden, z. B. Zaunelemente, Türelemente, Torelemente, Durchgangssperren, Brandschutzwände, Einbruchsschutzelemente, Schwimmbadabdeckelemente, begehbare Behelfsstege, Schutzflächen gegen Waffenwirkung. Desweiteren kann das Strukturelement auch für die Bildung von Räumen, Behelfsunterkünften od. dgl. verwendet werden. Gleichermaßen können daraus Behälterwände oder auch ganze Behälter für z. B. Flüssigkeiten und Schüttgüter hergestellt werden. Auch kann das Strukturelement als Sperrwand z. B. im Hochwasserschutz eingesetzt werden, wobei in diesem Fall viele Elemente aneinander gereiht eine Schutzwand ergeben. In einer anderen Ausführungsform kann das Strukturelement als windbelastbares Element, z. B. als Segel, ausgebildet werden. Desweiteren kann das Strukturelement als unterschiedlich große Projektionsfläche ausgebildet werden.

Vorteilhafte weitere Erfindungsmerkmale und Ausgestaltungen ergeben sich aus den Unteransprüchen.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen auf die Ansprüche Bezug genommen.

Dabei sind alle in der vorstehenden und folgenden Beschreibung erwähnten Merkmale sowie auch die allein aus den Zeichnungen entnehmbaren Merkmale weitere Bestandteile von besonderen Ausführungsarten der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: eine schematische Vorderansicht eines Strukturelements im aufgefalteten Zustand,
- Fig. 2: einen schematischen Schnitt entlang der Linie II-II in Fig. 1,
- Fig. 3: einen schematischen Schnitt entlang der Linie III-III in Fig. 1,
- Fig. 4: einen schematischen Schnitt entlang der Linie IV-IV in Fig. 1,
- Fig. 5a und 5b: einen schematischen Schnitt entlang der Linie V-V in Fig. 1 im zusammengefalteten bzw. aufgefalteten Zustand des Strukturelements,
- Fig. 6: einen schematischen Schnitt etwa entsprechend demjenigen in Fig. 2, wobei das Strukturelement jedoch schon weitgehend zugefaltet ist, gemäß einem zweiten Ausführungsbeispiel,
- Fig. 7: einen schematischen Schnitt des Strukturelements etwa entsprechend demjenigen in Fig. 2, gemäß einem dritten Ausführungsbeispiel,
- Fig. 8: eine schematische Ansicht eines Teils eines Strukturelements gemäß einem vierten Ausführungsbeispiel,
- Fig. 9 a und 9b: eine schematische Ansicht von Anordnungen, die zwei Strukturelemente aufweisen, die aufgefaltet sind,
- Fig. 10: eine Anordnung mit drei Strukturelementen, die aufgefaltet sind,
- Fig. 11: eine schematische Vorderansicht etwa entsprechend Fig. 1 eines Strukturelements gemäß einem weiteren Ausführungsbeispiel,
- Fig. 12: eine schematische Ansicht etwa entsprechend Fig. 9b einer Anordnung eines Strukturelements.

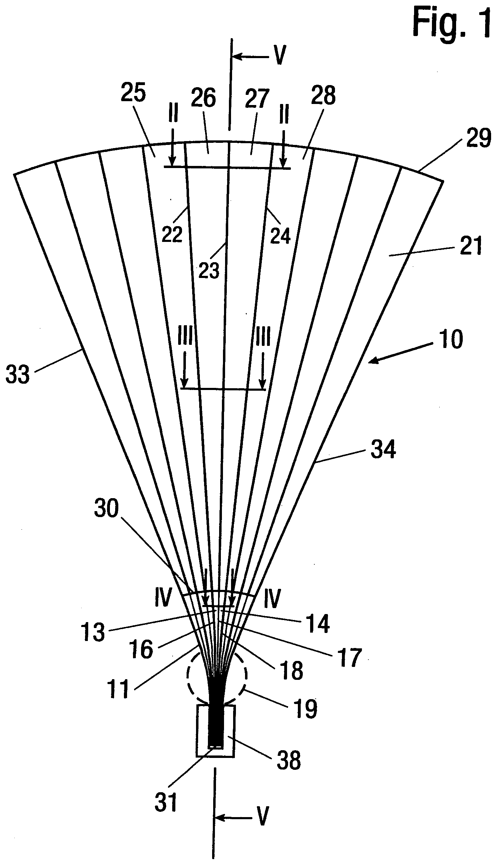

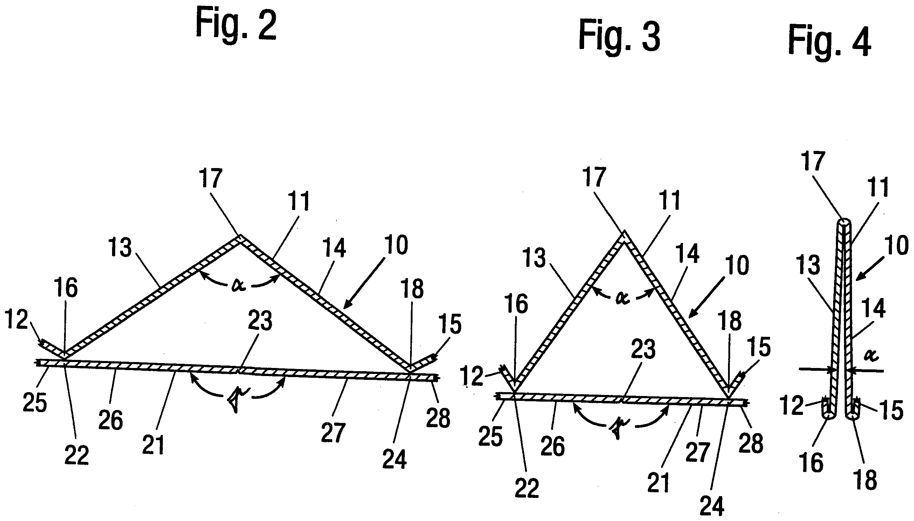

In den Zeichnungen ist ein Strukturelement 10 gezeigt, von dem in Fig. 1 z. B. ein Teilbereich oder ein vollständiges Element dargestellt ist. Das Strukturelement 10 weist eine erste Materiallage 11 auf, die aus aneinander anschließenden Sektoren 12 bis 15 und weiteren gebildet ist, die längs Gelenkachsen 16, 17, 18 und weiteren miteinander klappbar verbunden und etwa fächerartig auffaltbar und zufaltbar sind. Die Materiallage 11 sowie weitere nachfolgend beschriebene können z. B. aus flexiblem Material, insbesondere aus einer Folie, gebildet sein. Die Gelenkachsen 16, 17, 18 und weitere können mit Vorzug aus z. B. eingeprägten Knicken von Plisseefalten gebildet sein. Durch die Gelenkachsen 16, 17, 18 und weitere werden die einzelnen Sektoren 12 bis 15 und weitere voneinander abgegrenzt. Die Materiallage 11 ist plissiert unter Bildung der Sektoren 12 bis 15 als klappbar verbundene und in sich verdrehbare Streifenteile und hat eine etwa zickzackförmige Struktur. Das Strukturelement 10 hat ein schematisch mit 19 angedeutetes Schwenkzentrum, um das das Strukturelement 10 fächerartig in die Position gemäß Fig. 1 auffaltbar und gegensinnig in die Position etwa gemäß Fig. 4 zufaltbar ist, wobei die einzelnen Sektoren 12 bis 15 im Bereich der Gelenkachsen 16 bis 18 zu einem Stapel gefaltet werden. Am dem Schwenkzentrum 19 nahen Endbereich sind die gefalteten Sektoren 12 bis 15 zusammengefasst und zusammengehalten, z. B. mittels einer Klammer 38.

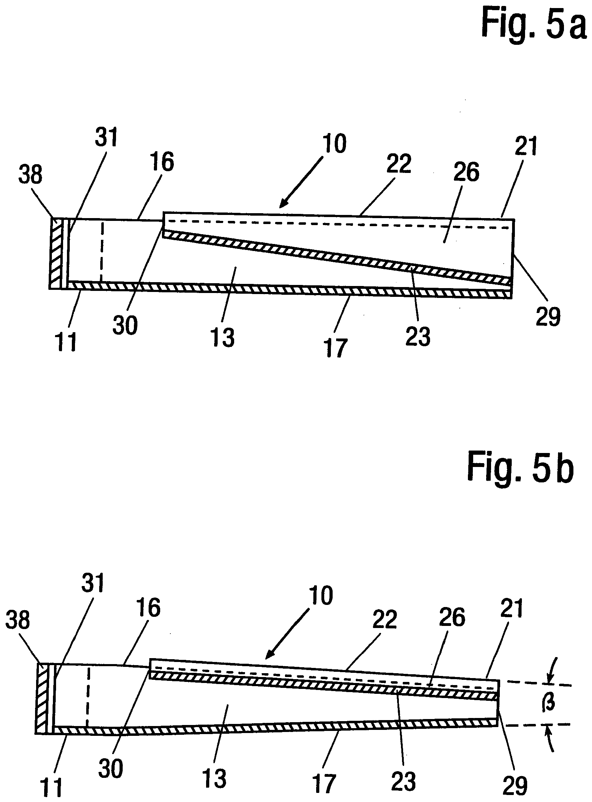

Auf zumindest einem Teilbereich einer Breitseite 20 der ersten Materiallage 11, z. B. auf der in Fig. 1 dem Betrachter zugewandten Breitseite 20, ist zumindest eine zweite Materiallage 21 angeordnet, die auffaltbare und zufaltbare, längs Gelenkachsen 22, 23, 24 und weitere klappbar miteinander verbundene Sektoren 25 bis 28 und weitere aufweist, von denen zumindest einige mit der ersten Materiallage 11 im Bereich solcher Gelenkachsen verbunden sind, die einander zugewandt und direkt benachbart sind. Demgemäß ist die zweite Materiallage 21 im Bereich ihrer Gelenkachsen 22 und 24 mit der ersten Materiallage 11 im Bereich der Gelenkachsen 16 und 18 verbunden. Die Gelenkachse 17 der ersten Materiallage 11 und die Gelenkachse 23 der zweiten Materiallage 21 sind nicht miteinander verbunden. Beim Falten der ersten und/oder zweiten Materiallage 11, 21 sind die Sektoren 25 bis 28 im Bereich ihrer Gelenkachsen 22 bis 24 zufaltbar und gegensinnig auffaltbar. Die Sektoren 26 und 27 der zweiten Materiallage 21 und die Sektoren 13 und 14 der ersten Materiallage 11 werden im Bereich aller Gelenkachsen im Sinne einer Zufaltung geklappt, so dass z. B. im nicht gezeigten zugefalteten Zustand die zweite Materiallage 21 mit ihren Sektoren 25 bis 28 im Bereich zwischen den Sektoren 12 bis 15 der ersten Materiallage 11 aufgenommen wird. Beim gegensinnigen Auffalten der Materiallagen 11, 21, veranlasst durch das Auffalten z. B. der ersten Materiallage 11, werden die Sektoren 25 bis 28 der zweiten Materiallage 21 bis zu einem zumindest annähernd ebenen Flächenverlauf aufgefaltet, wie dieser in Fig. 1 bis 3 dargestellt ist. In Fig. 5a hingegen ist ein Schnitt bei einem Faltzustand gezeigt, bei dem das Strukturelement 10 gegenüber Fig. 1 zugefaltet ist. Man erkennt daraus, dass die Sektoren 25 bis 28 der zweiten Materiallage 21 zumindest im zugefalteten Zustand zumindest mit einer Gelenkachse 22 oder 24 ihrer Gelenkachsen 22 bis 24 längs einer der Gelenkachsen 16, 18 der ersten Materiallage 11 und etwa parallel dazu verlaufen und ferner mit einer anderen Gelenkachse 23 ihrer Gelenkachsen 22 bis 24 schräg in Bezug auf zumindest eine Gelenkachse 17 der Gelenkachsen 16 bis 18 der ersten Materiallage 11 verlaufen. Man erkennt auch, dass die Sektoren 25 bis 28 der zweiten Materiallage 21 hinsichtlich ihrer Breite etwa dreieckförmig oder etwa trapezförmig, z. B. keilförmig, gestaltet sind. Die Breite der Sektoren 25 bis 28 der zweiten Materiallage 21 nimmt in Richtung zum Schwenkzentrum 19 ab. Stattdessen kann zumindest ein Teil dieser Sektoren 25 bis 28 bei anderen Ausführungsformen des Strukturelements 10 auch etwa rechteckförmig gestaltet sein. Die Sektoren 12 bis 15 der ersten Materiallage 11 sind jeweils etwa rechteckförmig gestaltet, können aber auch jeweils etwa dreieckförmig oder trapezförmig sein.

Die Anordnung ist hinsichtlich der beiden Materiallagen 11 und 21 so getroffen, dass deren Gelenkachsen 16 bis 18 bzw. 22 bis 24 im aufgefalteten Zustand des Strukturelements 10 jeweils in Bezug auf das Schwenkzentrum 19 radial strahlenförmig verlaufen, wie Fig. 1 zeigt. Dabei können die Sektoren 25 bis 28 vom äußeren Rand 29 ausgehend über die ganze Länge der Sektoren 12 bis 15 der ersten Materiallage 11 reichen oder sie enden in beliebigem Abstand vor den Enden 31 der Sektoren 12 bis 15.

Bei der ersten Materiallage 11 sind die Sektoren 12 bis 15 und weitere voneinander durch die Gelenkachsen 16 bis 18 und weitere abgegrenzt. Bei der zweiten Materiallage 21 sind deren Sektoren 25 bis 28 und weitere durch deren Gelenkachsen 22 bis 24 und weitere voneinander abgegrenzt. In vorteilhafter Weise sind die Sektoren 12 bis 15 bzw. 25 bis 28 miteinander einstückig verbunden und im Bereich der Gelenkachsen vorzugsweise gefaltet, so dass beim Zufalten ein selbsttätiges Einfalten jeder Materiallage 11, 21 im Bereich der zugeordneten Gelenkachsen geschieht.

Die Sektoren 25 bis 28 und weitere der zweiten Materiallage 21 schließen sich im aufgefalteten Zustand des Strukturelements 10 z. B. etwa innerhalb einer ebenen oder gebogenen oder gewölbten Fläche aneinander an oder verlaufen winklig zueinander. Vorteilhaft ist ein zumindest annähernd ebener Flächenverlauf. Dies führt dazu, dass die zweite Materiallage 21 aufgrund dieses ebenen Flächenverlaufs auf der Seite, die der ersten Materiallage 11 abgewandt ist, vielfältig nutzbar ist. So ist zumindest die zweite Materiallage 21 als mindestens ein Funktionselement, z. B. als Informationsträger, als Reflexionselement, als Leuchtelement, als Solarelement, als Projektionselement od. dgl. ausgebildet. In der Gestaltung als Informationsträger können auf die der ersten Materiallage 11 abgewandte Seite der zweiten Materiallage 21 die verschiedensten Text- und/oder Bildinformationen aufgebracht sein, z. B. durch Aufdrucken oder durch Aufkleben einer bedruckten Folie. Die zweite Materiallage 21 kann zumindest auf dieser Breitseite, zumindest bereichsweise, farbig gestaltet sein. Aufgrund des im aufgefalteten Zustand des Strukturelements 10 herstellbaren, z. B. annähernd ebenen Flächenverlaufs der zweiten Materiallage 21 ist diese auf der Seite, die der ersten Materiallage 11 abgewandt ist, auch gut zu reinigen und überhaupt gut zugänglich. Die zweite Materiallage 21 kann auch als Trägerelement für mindestens ein Funktionsmittel ausgebildet sein, z. B. für Solarzellen, Leuchtelemente, Informationselemente, Reflexionselemente od. dgl..

Im dargestellten aufgefalteten Zustand des Strukturelements 10 weist dieses eine große Festigkeit auf, die zum einen durch die etwa V-förmige Ausrichtung der Sektoren 12 bis 15 der ersten Materiallage 11 zueinander und den Zickzackverlauf erreicht ist sowie dadurch, dass die zweite Materiallage 21 im Bereich der Gelenkachsen 16, 18 aufgrund der dortigen Verbindung zur Steigerung der Belastbarkeit dieses Strukturverbandes beiträgt. Man erkennt, dass der maximale Winkel α, den zwei benachbarte Sektoren 13, 14 der ersten Materiallage 11 im vollkommen aufgefalteten Zustand des Strukturelements 10 im Bereich des äußeren Randes 29 einschließen, beim Auffalten der ersten Materiallage 11 vorgegeben und begrenzt ist durch das Auffalten der zweiten Materiallage 21 bis zu deren zumindest annähernd ebenem Flächenverlauf gemäß Fig. 1 bis 3. Auf diese Weise wirkt das Sektorenpaar 26, 27 der zweiten Materiallage 21 als Begrenzerelement für ein zugeordnetes Sektorenpaar 13, 14 der ersten Materiallage 11.

Beim ersten Ausführungsbeispiel gemäß Fig. 1 bis 5b ist z. B. durch entsprechendes Einprägen der Gelenkachsen 22 bis 24 der zweiten Materiallage 21 erreicht, dass beim Zufalten der ersten und/oder zweiten Materiallage 11, 21 die zweite Materiallage 21 mit ihren Sektoren 25 bis 28 zwischen den Sektoren 12 bis 15 der ersten Materiallage 11 aufgenommen wird. Dann ergibt sich im zugefalteten Zustand des Strukturelements 10 eine Stapeldicke dieses, die etwa durch die Dicke der einzelnen Sektoren 12 bis 15 und weitere und der Sektoren 25 bis 28 und weitere bestimmt ist mit einer Breite gemäß den Sektoren 12 bis 15.

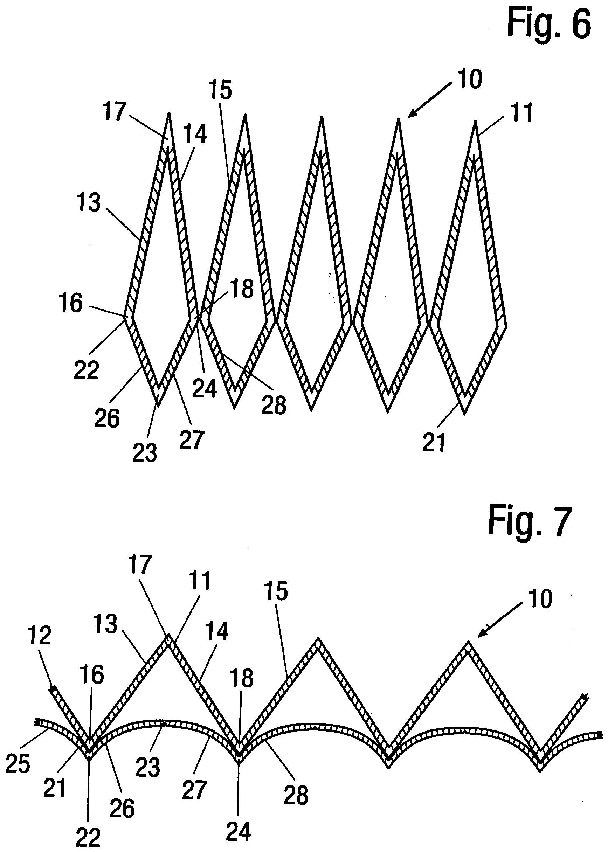

Es kann statt dessen die Anordnung aber auch entsprechend dem zweiten Ausführungsbeispiel gemäß Fig. 6 und so getroffen sein, dass beim Zufalten der ersten und/oder zweiten Materiallage 11, 21 sich die zweite Materiallage 21 mit ihren Sektoren 25 bis 28 und weitere außerhalb der Sektoren 12 bis 15 und folgende der ersten Materiallage 11 erstreckt. Eine solche Ausführungsform kann je nach Platzverhältnissen, Materialwahl der Materiallagen od. dgl. von Vorteil sein. Je nach Materialdicke der ersten Materiallage 11 und zweiten Materiallage 21 kann sich dadurch im zugefalteten Zustand ein schmaleres, niedrigeres Faltpaket des Strukturelements 10 ergeben.

Man erkennt aus Fig. 1 und Fig. 5a, dass die Sektoren 25 bis 28 und weitere der zweiten Materiallage 21 mit zumindest einer Gelenkachse 22 bzw. 24 längs einer der Gelenkachsen 16, 18 der ersten Materiallage 11 und etwa parallel dazu verlaufen, wobei sich diese Gelenkachsen im wesentlichen innerhalb einer gemeinsamen Ebene erstrecken, dass hingegen die Gelenkachsen 23, die nicht mit der ersten Materiallage 11 verbunden sind, schräg in Bezug auf die davon beabstandeten Gelenkachsen 17 der ersten Materiallage 11 verlaufen.

Aus Fig. 5b wird deutlich, dass der etwa rechtwinklig zur Aufspannebene des Strukturelements 10 gemessene Abstand der einander gegenüberliegenden Gelenkachsen 16 und 18 von 17 der ersten Materiallage 11 im aufgefalteten Zustand, ausgehend vom Schwenkzentrum 19 hin zum gegenüberliegenden äußeren Rand 29, abnimmt. Dies ist durch den Winkel β angedeutet. Man erkennt aus Fig. 5b, dass die Gelenkachsen 16 und 17 dabei einen spitzen Winkel β einschließen.

In Fig. 1 sind die Sektoren 12 bis 15 und weitere der Materiallage 11 im Bereich ihres inneren Endes 31 zu einem Schichtblock zusammengefasst und von einer Klammer 38 gehalten. Zumindest in diesem Bereich sind die Sektoren 12 bis 15 und weitere etwa rechtwinklig zur Aufspannebene des Strukturelements 10 ausgerichtet. Aus Fig. 4 ist dabei zu ersehen, wie zwei Sektoren 13, 14 der Materiallage 11 nahe des inneren Endes 31 und nahe am Schwenkzentrum 19 ausgerichtet sind und dass diese etwa rechtwinklig zur Aufspannebene des Strukturelements 10 verlaufen. Der Winkel α zwischen zwei Sektoren 13 und 14, der in Fig. 2 bis 4 eingezeichnet ist, vergrößert sich beim Auffalten der Sektoren 13 und 14, wobei dieser Winkel α, ausgehend vom inneren Ende 31 zum äußeren Rand 29 hin, größer wird. Im Bereich des äußeren Randes 29 kann der Winkel α zwischen zwei Sektoren 13 und 14 maximal etwa 180° betragen, wobei der äußere Rand 29 dabei nahezu geradlinig verläuft. Daraus ergibt sich, dass die Gelenkachsen 16 bis 18 und weitere bei zunehmendem Auffächern des Strukturelements 10 vom inneren Ende 31 zum äußeren Rand 29 hin hinsichtlich ihrer Längserstreckung schräg unter einem spitzen Winkel β zueinander verlaufen mit vom inneren Ende 31 zum äußeren Rand 29 hin abnehmendem Abstand voneinander (Fig. 5b).

Beim dritten Ausführungsbeispiel in Fig. 7 ist angedeutet, dass die Sektoren 25 bis 28 und weitere der zweiten Materiallage 21 mit der ersten Materiallage 11 zumindest teilweise flächig entlang dem beidseitig der Gelenkachsen 16, 22 sowie 18, 24 verlaufenden Randbereich verbunden sind. Auf diese Weise ergibt sich zumindest im Verbindungsbereich ein zumindest schwach bogenförmiger Verlauf der zweiten Materiallage 21 im aufgefalteten Zustand des Strukturelements. Diese flächige Verbindung kann durch Kleben, Schweißen od. dgl. Haftverbindung hergestellt werden.

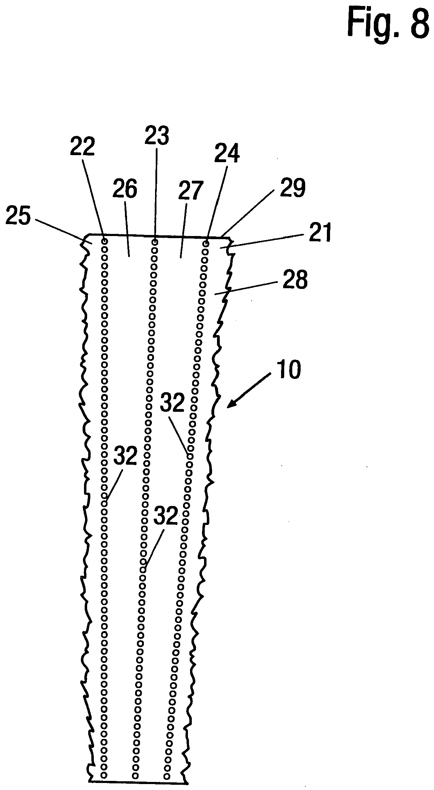

Bei dem in Fig. 8 gezeigten vierten Ausführungsbeispiel ist dargestellt, dass zumindest bei einer Materiallage 11, 21 deren Gelenkachsen jeweils Perforationslinien 32 aufweisen, wie für die Gelenkachsen 22 bis 24 und weitere der angrenzenden Sektoren 25 bis 28 der zweiten Materiallage 21 gezeigt ist. Derart ausgebildete Gelenkachsen 22 bis 24 können je nach Material der Materiallage 21 leichter und einfacher hergestellt und vorgeprägt werden mit Erzeugung des entsprechenden Memory-Effekts. Es ist vorteilhaft, wenn zumindest die Gelenkachsen 22 und 24 der zweiten Materiallage 21 aus mehreren, z. B. zwei, Perforationslinien 32 gebildet sind, die in sehr geringem Abstand etwa parallel zueinander verlaufen. Dieser Abstand kann dabei etwa dem Lochdurchmesser der Perforationspunkte entsprechen. Weiterhin kann es von Vorteil sein, wenn die als Perforationslinien ausgebildeten Gelenkachsen 22 bis 24 z. B. auf einer eben aufgespannten Folie in beliebigem Winkel zueinander verlaufen, so dass die Sektoren 25 bis 28 keilförmig, z. B. als Dreieck oder als Trapez, ausgebildet werden können. Vorteilhaft kann hierbei ferner sein, dass damit die Voraussetzungen dafür geschaffen sind, dass die Sektoren 25 bis 28 der zweiten Materiallage 21 leichter und einfacher mit den Sektoren 12 bis 15 der ersten Materiallage 11 entlang ihren zugewandten Gelenkachsen 16, 22 sowie 18, 24 z. B. punktförmig verbunden werden können. Statt einer solchen punktförmigen Verbindung oder zusätzlich zu dieser ist auch eine linienförmige Verbindung möglich, wie diese in den übrigen Zeichnungen gezeigt ist. Im zugefalteten Ausgangszustand des Strukturelements 10 kann dieses etwa die Struktur eines Fächers mit Schwenkzentrum 19 an dem Endbereich aufweisen, der dem äußeren Rand 29 gegenüberliegt. In diesem zugefalteten Zustand sind die einzelnen Sektoren 12 bis 15 und weitere der ersten Materiallage 11 im Bereich der Gelenkachsen 16 bis 18 und weitere einander soweit wie möglich genähert, was gleichermaßen für die im Bereich der Gelenkachsen 22 bis 24 und weitere zugefalteten Sektoren 25 bis 28 der zweiten Materiallage 21 gilt, wobei in diesem zugefalteten Zustand die Sektoren 25 bis 28 und weitere zwischen den Sektoren 12 bis 15 und weitere der ersten Materiallage 11 aufgenommen sein können. In diesem zugefalteten Zustand des Strukturelements 10 ergibt sich ein kompaktes, schmales Element, das nur einen relativ geringen Platzbedarf hat.

Das Strukturelement 10 wird dadurch aktiviert, dass dieses etwa fächerartig um das Schwenkzentrum 19 durch Auffalten der ersten Materiallage 11 und/oder zweiten Materiallage 21 aufgefaltet wird. Hierbei werden die Sektoren 12 bis 15 und weitere der ersten Materiallage 11 im Bereich der Gelenkachsen 16 bis 18 und weitere aufgefaltet. Zugleich werden die Sektoren 25 bis 28 und weitere der zweiten Materiallage 21 im Bereich der Gelenkachsen 22 bis 24 und weitere aufgefaltet, und zwar soweit, bis der vorgegebene Winkel α erreicht ist, den zwei benachbarte Sektoren 13, 14 der ersten Materiallage 11 einschließen, wobei dieser Winkel α vorgegeben und begrenzt wird durch das Auffalten der zweiten Materiallage 21 bis zu deren zumindest annähernd ebenem Flächenverlauf gemäß Fig. 2 und 3, bei dem sich die Sektoren 25 bis 28 und weitere der zweiten Materiallage 21 etwa innerhalb einer Ebene ebenflächig aneinander anschließen. Hierbei wirkt die zweite Materiallage 21 als Begrenzerelement. Dieser gänzlich aufgefaltete Zustand des Strukturelements 10 kann durch z. B. an den Endrändern 33 und 34 angreifende, in Auffaltrichtung wirkende Kräfte gesichert werden, z. B. durch daran angreifende Leisten od. dgl. Fixierelemente, die an nicht gezeigten Haltern im aufgefächerten Zustand des Strukturelements 10 gehalten werden.

Soll das Strukturelement 10 wieder in den Ausgangszustand überführt und zugefaltet werden, erfolgt eine gegensinnige etwa fächerartige Bewegung um das Schwenkzentrum 19, bis die einzelnen Sektoren 12 bis 15 und weitere der ersten Materiallage 11 und die Sektoren 25 bis 28 und weitere der zweiten Materiallage 21 den jeweiligen zugefalteten Zustand erreicht haben. Auch dieser kann durch z. B. an den Endrändern 33, 34 angreifende Sicherungselemente bedarfsweise gesichert werden.

Im aufgefalteten Zustand des Strukturelements 10 weisen die Gelenkachsen 16 bis 18 und weitere der ersten Materiallage 11, ausgehend vom Schwenkzentrum 19 bishin zum gegenüberliegenden Rand 29, einen zum Rand 29 hin zunehmenden Bogenverlauf auf, wie der Fachmann leicht erkennt. Die den Gelenkachsen 16 und 18 der ersten Materiallage 11 direkt benachbarten Gelenkachsen 22 und 24 der zweiten Materiallage 21 erstrecken sich über ihre gesamte Länge etwa geradlinig, und zwar auch im aufgefalteten Zustand des Strukturelements 10. Aufgrund dieser Tatsache ergibt sich zwischen direkt benachbarten Gelenkachsen 16, 18 und 22, 24 der Materiallage 11 bzw. 21 ein zum äußeren Rand 29 hin zunehmender Luftspalt im aufgefalteten Zustand des Strukturelements 10, wobei dieser Luftspalt dann am größten ist, wenn der von den Sektoren 13, 14 der ersten Materiallage 11 eingeschlossene Winkel α im Bereich des äußeren Randes 29 etwa 180° beträgt. Um die Bildung dieses Luftspaltes zwischen direkt benachbarten Gelenkachsen 16, 18 und 22, 24 der' ersten Materiallage 11 und der zweiten Materiallage 21 ausgleichen zu können, ist in vorteilhafter Weise die zweite Materiallage 21 in sich flexibel und/oder verschieblich mit der ersten Materiallage 11 verbunden oder zumindest über einen Teil der Gesamtlänge der Gelenkachsen 22, 24 ohne jede Verbindung zur ersten Materiallage 11 angeordnet. Vorteilhaft kann es sein, wenn zumindest ein Teil der direkt benachbarten Gelenkachsen 16, 18 und 22, 24 der ersten Materiallage 11 und der zweiten Materiallage 21 zumindest über einen Teil ihrer Gesamtlänge ausgehend vom äußeren Rand 29 hin zum Schwenkzentrum 19 verschieblich miteinander verbunden sind und/oder vollkommen unverbunden zueinander angeordnet sind.

Bei einem nicht gezeigten weiteren Ausführungsbeispiel kann auf der Breitseite der zweiten Materiallage 21, die der ersten Materiallage 11 abgewandt ist, noch eine dritte Materiallage, z. B. eine Schutzlage, vorgesehen sein. Diese dritte Materiallage kann mittels Haltern an der ersten Materiallage 11 und/oder zweiten Materiallage 21 gehalten sein. Die dritte Materiallage kann mit der zweiten Materiallage 21 verbunden sein. Beim Zufalten der ersten Materiallage 11 mit der zweiten Materiallage 21 und der dritten Materiallage kann sich diese dritte Materiallage innerhalb oder außerhalb der Sektoren 25 bis 28 und weitere der zweiten Materiallage 21 erstrecken.

Ferner ist gemäß einem weiteren, nicht gezeigten Ausführungsbeispiel vorgesehen, dass auf derjenigen Breitseite der ersten Materiallage 11, die der zweiten Materiallage 21 abgewandt ist, eine vierte Materiallage vorgesehen sein kann, die z. B. vorzugsweise entsprechend der zweiten Materiallage 21 ausgebildet und angeordnet ist. Mit der ersten Materiallage 11 und der zweiten Materiallage 21 sind dann auch die dritte und/oder vierte Materiallage fächerartig um das Schwenkzentrum 19 auffaltbar und gegensinnig zufaltbar. Die Materiallagen 11, 21 und weitere können mit ihrem dem Schwenkzentrum 19 fernen Randbereich 29 nach Vorgaben konturiert, z. B. zugeschnitten werden, unter Bildung von bogenförmigen und/oder geradlinigen und/oder spitzen od. dgl. gestalteten Randverläufen. Mittels der vierten Materiallage entsteht ein Strukturelement 10, das auf beiden Breitseiten z. B. etwa ebenflächig ausgebildet sein kann.

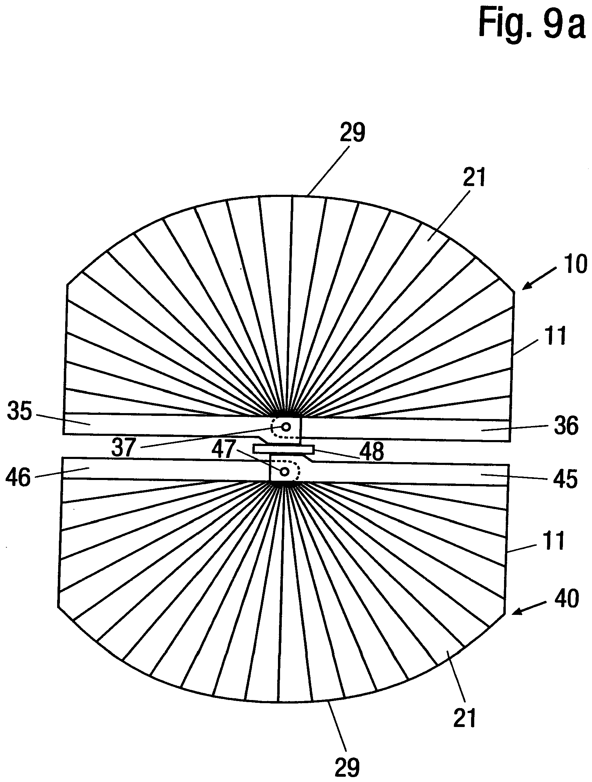

Beim Ausführungsbeispiel gemäß Fig. 9a ist eine Anordnung gezeigt, bei der mehrere Strukturelemente in sich ergänzender Bauanordnung zusammengefasst sind. Gemäß Fig. 9a sind zwei Strukturelemente 10 und 40 zu einer solchen Anordnung zusammengefasst, bei der jedes Strukturelement 10, 40 bis zu einem Fächerwinkel von etwa 180° auffächerbar ist. Es versteht sich gleichwohl, dass auch jedes einzelne Strukturelement 10, 40 für sich allein bei einer Auffächerbarkeit bis zu einem Fächerwinkel von etwa 180°, losgelöst vom anderen Strukturelement, eingesetzt werden kann. Das jeweilige Strukturelement kann dabei in vorteilhafter Weise Randstege 35, 36 bzw. 45, 46 aufweisen, die z. B. an den äußeren Rändern 33, 34 zumindest der ersten Materiallage 11 angreifen und z. B. im Bereich einer Schwenkachse 37 bzw. 47 miteinander schwenkbeweglich so verbunden sind, dass durch Relativschwenkung der jeweiligen Randstege 35, 36 bzw. 45, 46 ein Auffalten des Strukturelements 10 bzw. 40 z. B. in die jeweilige in Fig. 9a gezeigte Endlage sowie ein gegensinniges Zufächern ermöglicht ist. Die Randstege 35, 36 bzw. 45, 46 können im aufgefalteten Zustand des Strukturelements 10 bzw. 40 in Bezug zueinander, z. B. im Bereich der Schwenkachse 37 bzw. 47, fixierbar sein, so dass dadurch der aufgefaltete Zustand des Strukturelements 10 bzw. 40 gesichert ist.

Es versteht sich, dass statt dessen beim jeweiligen Strukturelement 10 bzw. 40 die Materiallagen 11, 21 und weitere stufenlos bis zu einem vom einen äußeren Rand 33 zum anderen Rand 34 gemessenen Fächerwinkel auffächerbar sind, der größer 90° ist, z. B. etwa 120°, 180° oder bishin zu 270° beträgt, und vorzugsweise in dieser Position fixierbar sind.

Man erkennt aus Fig. 9a, dass beim jeweiligen Strukturelement 10 und/oder 40 die aufgefächerten Materiallagen 11, 21 und weitere im aufgefächerten Zustand als Ganzes innerhalb eines räumlichen Koordinatensystems schwenkbar sind. Hierzu kann das jeweilige Strukturelement 10 und/oder 40 im Bereich eines äußeren Randes 33, 34 an oder in einem Träger 48, z. B. Trägerprofil, gehalten sein. Dabei kann dieser Träger 48 als Halter eines Strukturelements 10 und/oder 40 im Bereich eines äußeren Sektors oder auch als Halter von zwei Strukturelementen 10 und 40, dreiachsig schwenkbar sein, um das davon gehaltene Strukturelement 10 und/oder 40 innerhalb eines räumlichen Koordinatensystems gezielt ausgerichtet zu platzieren.

Beim Ausführungsbeispiel gemäß Fig. 9a ist außerdem verdeutlicht, dass die Materiallagen 11 und/oder 21 sowie weitere Materiallagen mit ihrem dem Schwenkzentrum fernen Randbereich 29 nach besonderen Vorgaben konturiert sind, z. B. gemäß Fig. 9a derart, dass sich je Strukturelement 10 bzw. 40 im aufgefalteten Zustand zumindest annähernd eine Rechteckform ergibt mit z. B. nur schwacher Bogenkrümmung am äußeren Rand 29.

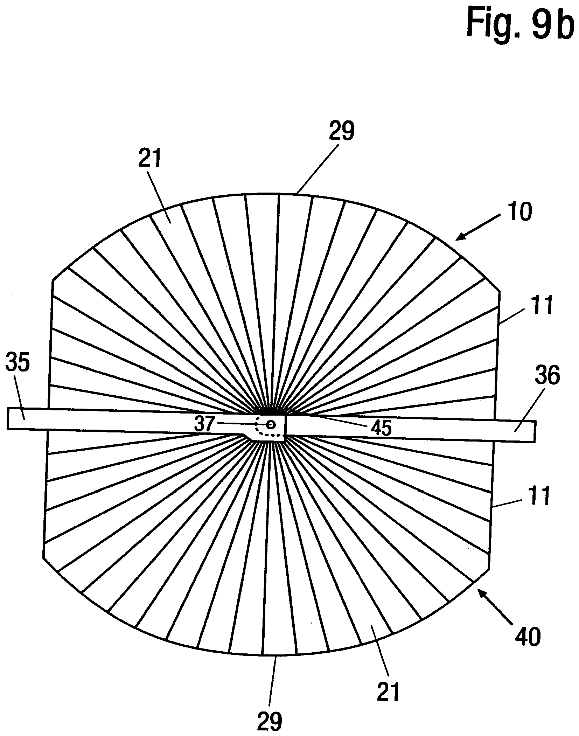

In Fig. 9a sind die beiden Strukturelemente 10 und 40 etwa innerhalb einer Ebene angeordnet, wobei dadurch zumindest im aufgefächerten Funktionszustand der beiden Strukturelemente zwischen dem Randstegpaar 35, 36 und dem Randstegpaar 45, 46 ein Zwischenraum entsteht, der von keinem der beiden Strukturelemente 10, 40 abgedeckt ist. Fig. 9b zeigt eine Anordnung aus zwei Strukturelementen 10, 40, wobei in Draufsicht auf diese Anordnung kein Zwischenraum zwischen den beiden Strukturelementen 10 und 40 vorhanden ist. Dies wird dadurch erreicht, dass sich das Strukturelement 10 in einer oberen Ebene und das Strukturelement 40 in einer darunterliegenden, unteren Ebene erstreckt. Das auseinandergeklappte Randstegpaar 45, 46 liegt dabei im Wesentlichen deckungsgleich unterhalb des Randstegpaares 35, 36, wobei der zwischen beiden Randstegpaaren 45, 46 und 35, 36 in dieser Position gemessene Abstand gegen Null gehen kann. Die Struktuelemente 10, 40 können sich dabei in Ebenen erstrecken, die jeweils parallel oder unter einem Winkel zueinander verlaufen.

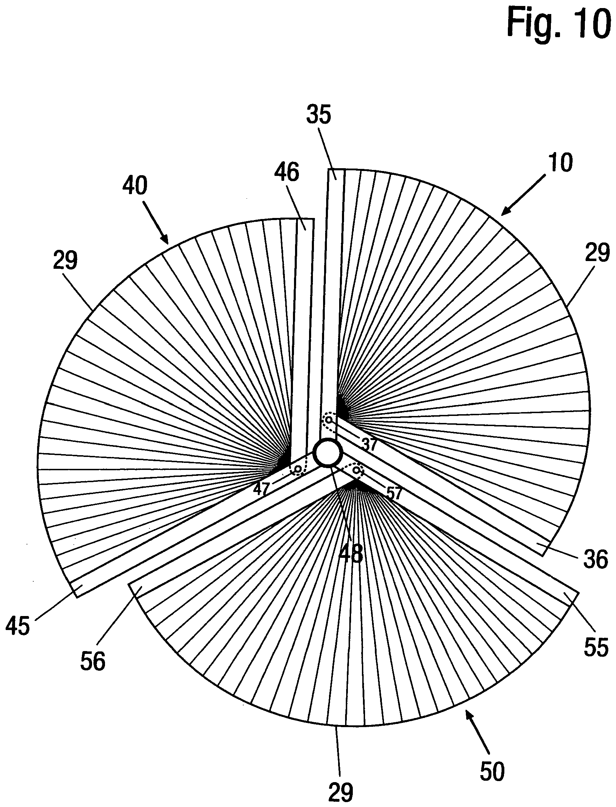

Bei dem in Fig. 10 gezeigten Ausführungsbeispiel sind drei Strukturelemente 10, 40 und 50 zu einer Anordnung zusammengefasst, wobei jedes Strukturelement z. B. bis zu einem Fächerwinkel von etwa 120° auffächerbar ist. Auch hier können die einzelnen Strukturelemente 10, 40 und 50 innerhalb eines räumlichen Koordinatensystems schwenkbar sein, entweder relativ zueinander und jedes Element für sich oder zusammengefasst als z. B. etwa kreisscheibenförmige Schwenkeinheit. Die Strukturelemente 10, 40 und 50 sind wie in Fig. 9a mit jeweiligen Randstegen 35, 36 bzw. 45, 46 bzw. 55, 56 versehen, die jeweils im Bereich einer Schwenkachse 37 bzw. 47 bzw. 57 relativ zueinander schwenkbar verbunden sind. Die einzelnen Strukturelemente 10, 40 und 50 sind entweder jeweils für sich an einem Träger 48 innerhalb eines räumlichen Koordinatensystems schwenkbar gehalten oder der Träger 48 dient statt dessen dazu, alle drei Strukturelemente 10, 40 und 50 z. B. im Bereich der jeweiligen Randstege 35, 45, 55 zu einer Einheit zusammenzuhalten. Auch dann ist diese Einheit mit Vorzug innerhalb eines räumlichen Koordinatensystems und somit dreiachsig schwenkbar, um diese Anordnung den jeweiligen räumlichen Gegebenheiten entsprechend ausrichten zu können.

Insbesondere die in Fig. 9a und 9b sowie Fig. 10 gezeigten Ausführungsbeispiele eignen sich z. B. zur Ausbildung von Solarelementen. Dabei ist die zweite Materiallage 21 entweder als Trägerelement für Solarzellen aller Art oder selbst als Solarfolie ausgebildet. Das jeweilige Solarelement kann dabei an Fahrzeugen aller Art, z. B. Personenkraftwagen, Lastkraftwagen, Omnibussen, landwirtschaftlichen Fahrzeugen, Wohnmobilen, Fahrrädern, Krafträdern, Motorrollern, Schiffen od. dgl., bleibend oder auswechselbar angebracht werden. Die Anbringung erfolgt dabei z. B. im oberen Bereich, z. B. Dachbereich, oder am seitlichen Bereich der Fahrzeuge.

Ist das Fahrzeug in Bewegung, befindet sich das Solarelement im zusammengefalteten, platzsparenden Aufbewahrzustand, so dass der durch das Solarelement verursachte Luftwiderstand äußerst gering ist. Im Parkzustand, im Stau und bei sehr langsamer Fahrt der Fahrzeuge, z. B. Binnenschiffe, landwirtschaftlichen Fahrzeuge, bei teilweisem Lieferverkehr od. dgl., wird das Solarelement teilweise oder vollständig in flächenbildende Funktionsstellung bewegt, in welcher die einfallende Sonnenstrahlung in elektrische Energie umgewandelt wird.

Von besonderem Vorteil ist die Tatsache, dass die für die Energiegewinnung zur Verfügung stehende Fläche der Solarelemente größer sein kann als die Grundfläche eines Fahrzeuges, da die Solarelemente über den äußeren Begrenzungsrand eines zugeordneten Fahrzeuges hinausragen können. Weiter ist es von Vorteil, dass die Reichweite eines Elektrofahrzeuges, bezogen auf eine Akku-Ladung, erheblich vergrößert werden kann.

In einer zweiten Ausgestaltungsvariante kann das jeweilige Solarelement an Gebäuden aller Art, z. B. an Wohnhäuser, Produktionsstätten, öffentlichen Gebäuden, Garagen od. dgl., angebracht werden. Eine Anbringung ist dabei sowohl an Wänden als auch auf Dachflächen möglich. Das Solarelement wird dabei als komplett funktionsfähige Montageeinheit im platzsparenden Aufbewahrzustand angeliefert und an Ort und Stelle montiert. Das vorgenannte Solarelement kann bei Bedarf auch am Erdboden befestigt werden.

Solche Solarelemente können auch zur dezentralen Stromerzeugung in Regionen zum Einsatz kommen, in denen Stromleitungsnetze nicht oder nur bedingt vorhanden sind, z. B. in Entwicklungsländern. Ebenso können solche Solarelemente im Katastrophenfall als Notstromelemente Verwendung finden.

Ein derartiges Solarelement besteht aus einem oder auch aus mehreren Strukturelementen, die in der Nähe ihres jeweiligen Schwenkzentrums 19 an einem Träger 48 gehalten sind. Der Träger 48 kann dabei z. B. als Mast ausgebildet sein, der z. B. an einem Gebäude oder an einem Fahrzeug befestigt ist. Die am Träger 48, z. B. Mast, befestigten Strukturelemente können starr oder auch relativ zum Träger 48 schwenkbar mit diesem verbunden sein.

Ein Solarelement, welches aus einem oder aus mehreren Strukturelementen gebildet ist, kann entweder als Gesamtheit mit seiner Gesamtfläche oder nur als Teil mit einer Teilfläche dem Sonnenstand so nachgeführt werden, dass der Einfallswinkel der Sonnenstrahlen immer 90° beträgt. Dies ist ein erheblicher Vorteil gegenüber Solarzellen, die unbeweglich an Gebäudeflächen und/oder an Fahrzeugflächen montiert sind.

Zusätzlich dazu ergibt sich auch bei Schneefall oder bei Sandstürmen ein weiterer Vorteil des Solarelementes. Während bekannte Solarzellen nach Schneefall oder nach Sandsturm von einer für Sonnenstrahlung undurchdringlichen Materialschicht bedeckt sind, befindet sich das Solarelement bei Schneefall und Sandsturm in der platzsparenden, zusammengefalteten Nicht-Funktionsstellung und kann sofort nach Abklingen von Schneefall bzw. Sandsturm wieder in seine flächige Funktionsstellung gebracht werden, so dass sofort wieder elektrische Energie produziert werden kann.

Das in Fig. 10 gezeigte Ausführungsbeispiel kann derart ausgestaltet werden, dass die Randstege 35, 45, 55 mit einem z. B. als Mast ausgebildeten Träger 48 einen etwa gleichen Winkel einschließen, der kleiner 90° ist, z. B. 60° beträgt. Auf diese Weise entsteht ein etwa trichterförmiges Gebilde, bei welchem die Trichteröffnung nach oben oder auch nach unten zeigen kann. Werden die zwischen den Strukturelementen 10, 40, 50 vorhandenen Bereiche geschlossen, kann ein derartiges trichterförmiges Gebilde mit nach oben zeigender Trichteröffnung z. B. als Behälter Verwendung finden, z. B. zum Sammeln von Regenwasser.

In einer anderen Ausführungsform kann ein derartiges trichterförmiges Gebilde mit nach unten weisender Trichteröffnung als zeltartiger, temporärer Schutzraum verwendet werden. Dabei können die äußeren Ränder 29 der Strukturelemente 10, 40, 50 so konturiert sein, dass zwischen dem z. B. am Erdboden auffliegenden unteren Rand des trichterförmigen Gebildes und dem Erdboden keine Zwischenräume vorhanden sind. Die Außenflächen dieses trichterartigen Schutzraumes können mit Solarzellen bestückt sein, wogegen die Innenflächen zumindest teilweise als Leuchtmedium ausgebildet sind, das mit der von den Solarzellen erzeugten Energie gespeist wird.

Die Strukturelemente 10, 40, 50 können auch als Leuchten ausgebildet sein. Die Materiallagen 11 und/oder 21 sind hierbei z. B. aus Leuchtfolien gebildet.

Die in Fig. 9a und 9b sowie Fig. 10 gezeigte Anordnung mehrerer Strukturelemente 10, 40, 50 kann auch als Schutzschirm oder Schutzschild gegen Regen, Hagel, Schnee, Sand, Sonne, Schall, Waffenwirkung, Strahlung, chemische Substanzen od. dgl. dienen.

Die jeweilige Materiallage 11, 21 kann z. B. aus Kunststoff, Metall, Papier, Karton oder Gewebe gebildet sein oder aus einem Verbund zweier oder mehrerer der genannten Materialien bestehen. Die Wandstärke der verwendeten Materialien kann vom Bereich von 1/1000 mm bis zum Zentimeterbereich reichen. Ein einzelner Sektor einer jeweiligen Materiallage 11, 21 kann für sich betrachtet als flexible Einheit oder als starre Einheit ausgebildet sein. Die einzelnen Sektoren der Materiallagen 11 und 21 können entweder als Reflexionselement, als Absorptionselement, als Transmissionselement oder als Kombinationselement daraus ausgestaltet sein, wobei eine beliebige Kombination dieser verschiedenartigen Elemente innerhalb einer Materiallage und innerhalb eines zugeordneten Strukturelements möglich ist.

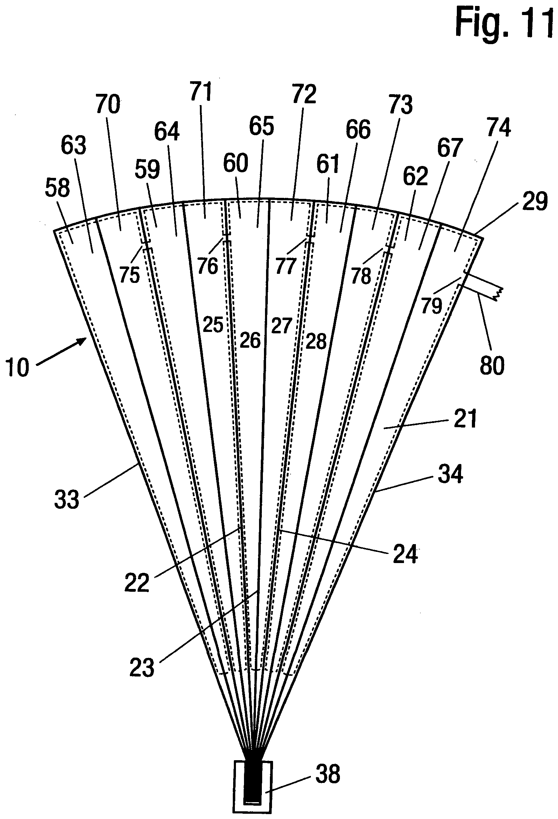

Bei dem in Fig. 11 gezeigten weiteren Ausführungsbeispiel ist gezeigt, dass zwischen zwei Materiallagen 11, 21, z. B. der ersten Materiallage 11 und der zweiten Materiallage 21, Aktoren 58 bis 62 angeordnet sind, die zum Auffalten und/oder Zufalten der Materiallagen 11, 21 aktivierbar sind. Diese Aktoren 58 bis 62 sind z. B. mit Druckmittel, z. B. Druckluft, beaufschlagbar. Als Aktoren 58 bis 62 sind einzelne Elemente 63 bis 67 vorgesehen, die Druckkammern 70 bis 74 enthalten. Diese Elemente 63 bis 67, insbesondere deren Druckkammern, stehen miteinander in Verbindung, z. B. über angedeutete Verbindungsleitungen 75 bis 79, wobei diese gemeinsam über eine Versorgungsleitung 80 gespeist werden, z. B. aus einer Druckluftquelle. Von dieser können die Druckkammern 70 bis 74 zum Auffalten des Strukturelements 10 mit Druckmittel versorgt werden. Befindet sich das Strukturelement im nicht gezeigten, zusammengefalteten Aufbewahrungszustand, kann über die Versorgungsleitung 80 in die einzelnen Druckkammern 70 bis 74 Druckmittel, z. B. Druckluft od. dgl. Druckgas, eingeleitet werden. Die einzelnen Aktoren 58 bis 62 werden dadurch aktiviert unter Volumenzunahme. Sie werden z. B. aufgeblasen, wodurch die zusammengefalteten Materiallagen 11 und 21 entfaltet werden. Auf diese Weise wird das Strukturelement 10 in die Funktionsposition überführt, in der die Materiallage 21 z. B. einen etwa ebenen Flächenverlauf aufweist. Die Aktoren 58 bis 62 können vielfältig gestaltet sein. Es kann sich dabei um aufblähbare Druckkissen, Druckschläuche, Kolben-/Zylinderaggregate od. dgl. Elemente 63 bis 67 handeln. Von besonderem Vorteil kann es sein, wenn der zwischen den beiden Materiallagen 11, 21 gebildete Innenraum selbst als Druckkammer 70 bis 74 genutzt wird, wobei dieser Innenraum dann druckhaltend nach außen abgeschlossen ist. Zum Zufalten des Strukturelements 10 werden die Druckkammern 70 bis 74 drucklos gemacht, z. B. entlüftet. Mittels einer z. B. pneumatischen oder mechanischen Rückstellung, z. B. durch Federkraft, kann das Strukturelement 10 dann wieder zusammengefaltet werden.

Anstelle von Druckgas können die Druckkammern auch mit einem nicht brennbaren Medium, z. B. Pulver, Schaum, usw. befüllt werden, das unter Druck in die Druckkammern 70 bis 74 gepresst wird. Auf diese Weise entsteht dann sekundenschnell eine Brandschutzwand.

Werden die einzelnen Druckkammern 70 bis 74 z. B. mit kleinen Kugeln aus entsprechendem Material befüllt, ergibt sich ein Schallschutzelement oder Isolierelement. Die einzelnen Druckkammern 70 bis 74 können auch mit flüssigem Druckmedium befüllt werden.

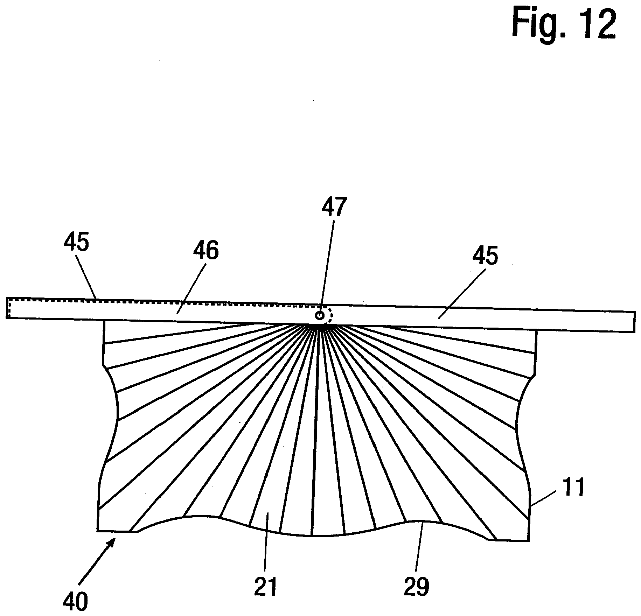

Bei dem in Fig. 12 gezeigten weiteren Ausführungsbeispiel ist ein Strukturelement 10 an einem durchgehenden Randsteg 45 gehalten. Innerhalb des Randsteges 45 ist ein im Vergleich dazu kürzerer Randsteg 46 aufgenommen, der mit einem Rand des Strukturelements 10 verbunden sein kann und um die Schwenkachse 47 schwenkbar gehalten ist, während der andere Rand des Strukturelements 10, der sich in Fig. 12 auf der rechten Seite der Schwenkachse 47 befindet, mit dem durchgehenden Randsteg 45 verbunden ist. In Fig. 12 ist ferner hinsichtlich des Strukturelements gezeigt, dass die Materiallagen dieses mit ihrem Randbereich 29 unter Bildung von bogenförmigen und/oder geradlinigen und/oder spitzen od. dgl. gestalteten Randverläufen konturiert sind.

In Fig. 5b sind die Gelenkachsen 16 bis 18 der ersten Materiallage 11 als geradlinige, zueinander unter Einschluss des Winkels β verlaufende Achsen dargestellt. Bei einem abgewandelten Ausführungsbeispiel können diese Gelenkachsen im aufgefalteten Zustand des Strukturelements 10 zumindest über einen Teil ihrer Gesamtlänge bogenförmig verlaufen. Dabei kann der Bogenverlauf, ausgehend vom Schwenkzentrum 19 hin zum gegenüberliegenden Rand 29, zu diesem Rand hin zunehmen.

Auch wenn in den einzelnen Figuren für das jeweilige Strukturelement ein Schwenkzentrum 19 gezeigt ist, kann bei einem abgewandelten Ausführungsbeispiel ein jeweiliges Strukturelement auch mindestens zwei Schwenkzentren aufweisen.

Von Vorteil kann es ferner sein, wenn zumindest ein Teil der Sektoren 12 bis 15 der ersten Materiallage 11 als mechanischer Energiespeicher ausgebildet ist. Diese Sektoren werden beim Auffalten des Strukturelements 10 durch elastische Verformung dann mit Energie aufgeladen, die zum Zusammenfalten zumindest teilweise nutzbar ist. Mittels der im vollständig aufgefalteten Zustand des Strukturelements 10 als aufgeladene Energiespeicher ausgebildeten Sektoren 12 bis 15 der ersten Materiallage 11 können die mit Druckmittel beaufschlagten Aktoren 58 bis 62 zumindest teilweise entleerbar sein. Im aufgefalteten Zustand des Strukturelements 10 kann der von den Sektoren 13, 14 der ersten Materiallage 11 eingeschlossene Winkel α mittels der Randstege 35, 36 zumindest der ersten Materiallage 11 oder mittels der als Einstellelemente wirkenden Aktoren 58 bis 62 einstellbar sein.

Wird das Strukturelement 10 aus seinem Nichtfunktionszustand, in welchem sich die Sektoren 12 bis 15 der ersten Materiallage 11 und die Sektoren 25 bis 28 der zweiten Materiallage 21 im zusammengefalteten Stapelzustand befinden, in seinen flächigen Funktionszustand bewegt, werden die Sektoren 12 bis 15 der ersten Materiallage 11 voneinander weg aufgeklappt und gleichzeitig zumindest über einen Teil ihrer Längserstreckung in sich verdreht. Bei diesem Vorgang des Insichverdrehens speichert jeder Sektor 12 bis 15 zumindest einen Teil der Energie, die zum Aufklappen eingeleitet wurde. Diese Energie bleibt solange gespeichert, bis das Strukturelement 10 von seinem flächigen Funktionszustand in seinen platzsparenden Nichtfunktionszustand bewegt wird. Dabei wird zumindest ein Teil der Energie, die zum Zufalten des Strukturelements 10 benötigt wird, durch die in den Sektoren 12 bis 15 der Materiallage 11 gespeicherte Energie gedeckt. Sind zwischen zwei Materiallagen 11, 21, z. B. der ersten Materiallage 11 und der zweiten Materiallage 21, beschriebene Aktoren 58 bis 62 angeordnet, die zum Auffalten der Materiallagen 11 und 21 mit Druckmittel, z. B. Druckgas oder Druckflüssigkeit, beaufschlagbar sind, kann die im flächigen Auffaltzustand der Materiallagen 11, 21 in den Sektoren 12 bis 15 der Materiallage 11 gespeicherte Energie zumindest zum teilweisen Entleeren, z. B. Herauspressen des Druckmittels aus den als Druckkammern 70 bis 74 ausgebildeten Aktoren 58 bis 62 benutzt werden. Werden die Sektoren 12 bis 15 der ersten Materiallage 11 und/oder die Sektoren 25 bis 28 der zweiten Materiallage 21 bereits im platzsparenden Stapelzustand gegen Auffalten vorgespannt, können die im vollkommen aufgefalteten Zustand des Strukturelements 10 und damit der Materiallagen 11, 21 vollständig befüllten Druckkammern 70 bis 74 allein mit der innerhalb der Sektoren 12 bis 15 der ersten Materiallage 11 und/oder der Sektoren 25 bis 28 der zweiten Materiallage 21 gespeicherten Energie vollkommen entleert werden.

## Patentansprüche

1. Strukturelement, das um ein Schwenkzentrum (19) fächerartig auffaltbare und zufaltbare, längs Gelenkachsen (16 bis 18) miteinander klappbar verbundene Sektoren (12 bis 15) einer Materiallage (11) aufweist, wobei auf zumindest einem Teilbereich einer Breitseite (20) der Materiallage (11) zumindest eine zweite Materiallage (21) angeordnet ist, die auffaltbare und zufaltbare, längs Gelenkachsen (22 bis 24) klappbar miteinander verbundene Sektoren (25 bis 28) aufweist, von denen zumindest einige mit der ersten Materiallage (11) im Bereich einander zugewandter Gelenkachsen (16, 18, 22, 24) verbunden sind und die beim Falten der ersten und/oder zweiten Materiallage (11, 21) im Bereich ihrer Gelenkachsen (22 bis 24) zufaltbar und gegensinnig auffaltbar sind, und wobei die Gelenkachsen (16 bis 18) der ersten Materiallage (11) und die Gelenkachsen (22 bis 24) der zweiten Materiallage (21) im aufgefalteten Zustand des Strukturelements (10) jeweils in Bezug auf das Schwenkzentrum (19) radial strahlenförmig verlaufen und die Sektoren (12 bis 15 bzw. 25 bis 28) voneinander abgrenzen,
wobei die Sektoren (25 bis 28) der zweiten Materiallage (21) im aufgefalteten Zustand sich etwa innerhalb einer etwa ebenen oder gebogenen oder gewölbten Fläche aneinander anschließen,
**dadurch gekennzeichnet,**
**dass** ein von den Sektoren (26, 27) der zweiten Materiallage (21) eingeschlossener Winkel ([gamma]) im vollkommen aufgefalteten Zustand des Strukturelements (10) ausgehend vom Schwenkzentrum (19) hin zum äußeren Rand (29) gleichbleibt.

2. Strukturelement nach Anspruch 1,
**dadurch gekennzeichnet,**
**dass** der Maximalwinkel, den zwei benachbarte Sektoren (13, 14) der ersten Materiallage (11) im vollkommen aufgefalteten Zustand des Strukturelements (10) im Bereich des äußeren Randes (29) einschließen, beim Auffalten der ersten Materiallage (11) vorgegeben und begrenzt ist durch das Auffalten der zweiten Materiallage (21) bis zum zumindest annähernd ebenen Flächenverlauf.

3. Strukturelement nach einem der Ansprüche 1 bis 2,
**dadurch gekennzeichnet,**
**dass** beim Zufalten der ersten und/oder der zweiten Materiallage (11, 21) die zweite Materiallage (21) mit ihren Sektoren (25 bis 28) zwischen den Sektoren (12 bis 15) der ersten Materiallage (11) aufgenommen wird.

4. Strukturelement nach einem der Ansprüche 1 bis 3,
**dadurch gekennzeichnet,**
**dass** die Sektoren (25 bis 28) der zweiten Materiallage (21) etwa
dreieckförmig oder etwa trapezförmig, z. B. keilförmig, sind, oder dass zumindest ein Teil der Sektoren (25 bis 28) der zweiten Materiallage (21) etwa rechteckförmig sind.

5. Strukturelement nach einem der Ansprüche 1 bis 4,
**dadurch gekennzeichnet,**
**dass** die Sektoren (25 bis 28) der zweiten Materiallage (21) zumindest im zugefalteten Zustand mit einer Gelenkachse (23) ihrer Gelenkachsen (22, 23, 24) schräg in Bezug auf zumindest eine Gelenkachse (17) der Gelenkachsen (16 bis 18) der ersten Materiallage (11) verlaufen, vorzugsweise dass die Breite der Sektoren (25 bis 28) der zweiten Materiallage (21) in Richtung zum Schwenkzentrum (19) abnimmt.

6. Strukturelement nach einem der Ansprüche 1 bis 5,
**dadurch gekennzeichnet,**
**dass** die Sektoren (12 bis 15) der ersten Materiallage (11) jeweils etwa rechteckförmig gestaltet sind, oder jeweils etwa dreieckförmig oder trapezförmig sind.

7. Strukturelement nach einem der Ansprüche 1 bis 6,
**dadurch gekennzeichnet,**
**dass** der etwa rechtwinklig zur Aufspannebene des Strukturelements (10) gemessene Abstand der einander gegenüberliegenden Gelenkachsen (16, 18 und 17) voneinander der ersten Materiallage (11) im aufgefalteten Zustand des Strukturelements (10) ausgehend vom Schwenkzentrum (19) bis hin zum gegenüberliegenden äusseren Rand (29) abnimmt (Winkel β).

8. Strukturelement nach einem der Ansprüche 1 bis 7,
**dadurch gekennzeichnet, dass** die Gelenkachsen (16 bis 18) der ersten Materiallage (11) im aufgefalteten Zustand des Strukturelements (10) zumindest über einen Teil ihrer Gesamtlänge bogenförmig verlaufen, insbesondere ausgehend vom Schwenkzentrum (19) hin zum gegenüberliegenden Rand (29) einen zum Rand (29) hin zunehmenden Bogenverlauf aufweisen.

9. Strukturelement nach einem der Ansprüche 1 bis 8,
**dadurch gekennzeichnet,**
**dass** zumindest ein Teil der direkt benachbarten Gelenkachsen (16, 18 und 22, 24) der ersten Materiallage (11) und der zweiten Materiallage (21) zumindest über einen Teil ihrer Gesamtlänge ausgehend vom äußeren Rand (29) hin zum Schwenkzentrum (19) verschieblich miteinander verbunden sind und/oder vollkommen unverbunden zueinander angeordnet sind.

10. Strukturelement nach einem der Ansprüche 1 bis 9,
**dadurch gekennzeichnet,**
**dass** auf der Breitseite der zweiten Materiallage (21), die der ersten Materiallage (11) abgewandt ist, eine dritte Materiallage, z. B. Schutzlage, vorgesehen ist, und vorzugsweise, dass auf derjenigen Breitseite der ersten Materiallage (11), die der zweiten Materiallage (21) abgewandt ist, eine vierte Materiallage vorgesehen ist, die vorzugsweise entsprechend der zweiten Materiallage (21) ausgebildet und angeordnet ist.

11. Strukturelement nach einem der Ansprüche 1 bis 10,
**dadurch gekennzeichnet,**
**dass** die Materiallagen (11, 21 und weitere) mit ihrem dem Schwenkzentrum (19) fernen Randbereich (29) nach Vorgaben konturiert, z. B. zugeschnitten, sind unter Bildung von bogenförmigen und/oder geradlinigen und/oder spitzen od. dgl. gestalteten Randverläufen.

12. Strukturelement nach einem der Ansprüche 1 bis 11,
**dadurch gekennzeichnet,**
**dass** zumindest die zweite Materiallage (21) als mindestens ein Funktionselement, z.B. als Informationsträger, als Reflexionselement, als Leuchtelement, als Solarelement, als Projektionselement oder dgl., ausgebildet ist, oder als Trägerelement für mindestens ein Funktionsmittel, z.B. für Solarzellen, Leuchtelemente, Informationselemente, Reflexionselemente oder dgl., ausgebildet ist.

13. Strukturelement nach einem der Ansprüche 1 bis 12,
**dadurch gekennzeichnet,**
**dass** zwischen zwei Materiallagen (11, 21), z. B. der ersten Materiallage (11) und der zweiten Materiallage (21), Aktoren (58 bis 62) angeordnet sind, die zum Auffalten und/oder Zufalten der Materiallagen (11, 21) aktivierbar sind, insbesondere mit Druckmittel beaufschlagbar sind.

14. Strukturelement nach einem der Ansprüche 1 bis 13,
**dadurch gekennzeichnet,**
**dass** zumindest ein Teil der Sektoren (12 bis 15) der ersten Materiallage (11) als mechanischer Energiespeicher ausgebildet sind, die beim Auffalten des Strukturelements (10) durch elastische Verformung mit Energie aufgeladen werden, die zum Zusammenfalten zumindest teilweise nutzbar ist.

15. Strukturelement nach einem oder mehreren der vorhergehenden Ansprüche,
**dadurch gekennzeichnet, dass** die Sektoren (25 bis 28) der zweiten Materiallage (21) entlang dem beidseitig der Gelenkachsen (22, 24) verlaufenden Randbereich zumindest teilweise flächig mit der ersten Materiallage (11) verbunden sind.

## Claims

1. Structural element, comprising sectors (12 to 15) of a material layer (11) which are foldably connected to one another along hinge axes (16 to 18) and which are foldable open and closed in a fan-like manner about a pivot centre (19), wherein at least one second material layer (21) is arranged on at least one subregion of a broad side (20) of the material layer (11) and comprises sectors (25 to 28), which are foldably connected to one another along hinge axes (22 to 24) and are foldable open and closed and of which at least some are connected to the first material layer (11) in the region of mutually facing hinge axes (16, 18, 22, 24) and which are foldable closed and open in the opposite direction in the region of the hinge axes (22 to 24) thereof when the first and/or second material layer (11, 21) is folded, and wherein the hinge axes (16 to 18) of the first material layer (11) and the hinge axes (22 to 24) of the second material layer (21), in the folded-open state of the structural element (10), each extend radially in the manner of rays with respect to the pivot centre (19) and delineate the sectors (12 to 15 and 25 to 28) from each other,
wherein the sectors (25 to 28) of the second material layer (21), in the folded-open state, adjoin one another approximately within an approximately flat or curved or arched surface, **characterized**
**in that** an angle ([gamma]) formed by the sectors (26, 27) of the second material layer (21) remains the same in the fully folded-open state of the structural element (10) proceeding from the pivot centre (19) toward the outer edge (29).

2. Structural element according to Claim 1,
**characterized**
**in that** the maximum angle formed by two adjacent sectors (13, 14) of the first material layer (11) in the fully folded-open state of the structural element (10) in the region of the outer edge (29) is predefined and limited, when the first material layer (11) is folded open, by the folding open of the second material layer (21) up to an at least approximately flat surface shape.

3. Structural element according to one of Claims 1 to 2,
**characterized**
**in that**, when the first and/or the second material layer (11, 21) is folded closed, the second material layer (21), with the sectors (25 to 28) thereof, is received between the sectors (12 to 15) of the first material layer (11).

4. Structural element according to one of Claims 1 to 3,
**characterized**
**in that** the sectors (25 to 28) of the second material layer (21) are approximately triangular or approximately trapezoidal, e.g. wedge-shaped, or in that at least some of the sectors (25 to 28) of the second material layer (21) are approximately rectangular.

5. Structural element according to one of Claims 1 to 4,
**characterized**
**in that** the sectors (25 to 28) of the second material layer (21) extend, at least in the folded-closed state, by way of a hinge axis (23) of the hinge axes (22, 23, 24) thereof, obliquely with respect to at least one hinge axis (17) of the hinge axes (16 to 18) of the first material layer (11), preferably in that the width of the sectors (25 to 28) of the second material layer (21) decreases in the direction toward the pivot centre (19).

6. Structural element according to one of Claims 1 to 5,
**characterized**
**in that** the sectors (12 to 15) of the first material layer (11) each have an approximately rectangular shape, or are each approximately triangular or trapezoidal.

7. Structural element according to one of Claims 1 to 6,
**characterized**
**in that**, in the folded-open state of the structural element (10), the distance between the mutually opposite hinge axes (16, 18 and 17) of the first material layer (11), as measured approximately at a right angle to the clamping plane of the structural element (10), decreases proceeding from the pivot centre (19) toward the opposite, outer edge (29) (angle β).

8. Structural element according to one of Claims 1 to 7,
**characterized**
**in that** the hinge axes (16 to 18) of the first material layer (11), in the folded-open state of the structural element (10), extend in a curved manner at least over a part of the entire length thereof, in particular have a curved shape which increases toward the edge (29) proceeding from the pivot centre (19) toward the opposite edge (29).

9. Structural element according to one of Claims 1 to 8,
**characterized**
**in that** at least some of the directly adjacent hinge axes (16, 18 and 22, 24) of the first material layer (11) and of the second material layer (21) are displaceably connected to one another at least over a part of the entire length thereof proceeding from the outer edge (29) toward the pivot centre (19) and/or are arranged such that they are fully disconnected from one another.

10. Structural element according to one of Claims 1 to 9,
**characterized**
**in that** a third material layer, e.g. a protective layer, is provided on the broad side of the second material layer (21) which faces away from the first material layer (11), and preferably in that a fourth material layer, which is preferably designed and arranged similarly to the second material layer (21), is provided on that broad side of the first material layer (11) which faces away from the second material layer (21).

11. Structural element according to one of Claims 1 to 10,
**characterized**
**in that** the material layers (11, 21 and others) are contoured, e.g. tailored, according to specifications by way of the edge region (29) thereof which is remote from the pivot centre (19), so as to form edge shapes which are curved and/or straight and/or pointed or the like.

12. Structural element according to one of Claims 1 to 11,
**characterized**
**in that** at least the second material layer (21) is designed as at least one functional element, e.g. as an information carrier, as a reflection element, as a lighting element, as a solar element, as a projection element or the like, or is designed as a carrier element for at least one functional means, e.g. for solar cells, lighting elements, information elements, reflection elements or the like.

13. Structural element according to one of Claims 1 to 12,
**characterized**
**in that** actuators (58 to 62) are arranged between two material layers (11, 21), e.g. the first material layer (11) and the second material layer (21), and can be activated, in particular can be acted upon by pressure medium, to fold the material layers (11, 21) open and/or closed.

14. Structural element according to one of Claims 1 to 13,
**characterized**
**in that** at least some of the sectors (12 to 15) of the first material layer (11) are designed as mechanical energy accumulators, which are loaded with energy via elastic deformation when the structural element (10) is folded open, said energy being usable at least in part for folding together.

15. Structural element according to one or more of the preceding claims,
**characterized**
**in that** the sectors (25 to 28) of the second material layer (21) are connected to the first material layer (11) at least partially in a planar manner along the edge region extending on both sides of the hinge axes (22, 24).

## Revendications

1. Élément structurel, comportant des secteurs (12 à 15) d'une couche de matière (11) pouvant être dépliés et repliés à la façon d'un éventail autour d'un centre de pivotement (19) et reliés de façon rabattable entre eux le long des axes articulés (16 à 18), au moins une deuxième couche de matière (21) étant disposée sur au moins une zone partielle d'un côté de largeur (20) de la couche de matière (11), cette couche comportant des secteurs (25 à 28) pouvant être dépliés et repliés, reliés entre eux de façon rabattable le long des axes articulés (22 à 24) parmi lesquels au moins quelques-uns sont reliés à la première couche de matière (11) dans la région des axes articulés (16, 18, 22, 24) orientés les uns vers les autres et pouvant être repliés lors du pliage de la première et/ou deuxième couche de matière (11, 21) dans la région de ses axes articulés (22 à 24) et pouvant être dépliés dans le sens contraire et les axes articulés (16 à 18) de la première couche de matière (11) et les axes articulés (22 à 24) de la deuxième couche de matière (21) s'étendant, dans l'état déplié de l'élément structurel (10), respectivement par rapport au centre de pivotement (19) dans le plan radial en forme de faisceau et les secteurs (12 à 15 et/ou 25 à 28) se délimitant les uns les autres ;
les secteurs (25 à 28) de la deuxième couche de matière (21) se délimitant les uns les autres, dans l'état déplié, approximativement à l'intérieur d'une surface approximativement plane ou incurvée ou bombée ;
**caractérisé en ce que** :
un angle ([gamma]) comprenant les secteurs (26, 27) de la deuxième couche de matière (21) reste égal dans l'état entièrement déplié de l'élément structurel (10), en partant du centre de pivotement (19) jusqu'à la bordure extérieure (29).

2. Élément structurel selon la revendication 1, **caractérisé en ce que** l'angle maximal comprend deux secteurs (13, 14) connexes de la première couche de matière (11), dans l'état entièrement déplié de l'élément structurel (10), dans la région de la bordure extérieure (29) et qu'il est prédéfini et délimité lors du dépliage de la première couche de matière (11) par le dépliage de la deuxième couche de matière (21) jusqu'à au moins approximativement la courbe superficielle plane.

3. Élément structurel selon l'une quelconque des revendications 1 à 2, **caractérisé en ce que** lors du repliage de la première et/ou de la deuxième couche de matière (11, 21), la deuxième couche de matière (21) est reçue avec ses secteurs (25 à 28) entre les secteurs (12 à 15) de la première couche de matière (11).

4. Élément structurel selon l'une quelconque des revendications 1 à 3, **caractérisé en ce que** les secteurs (25 à 28) de la deuxième couche de matière (21) sont approximativement en forme de triangle ou approximativement en forme de trapèze, par exemple en forme de clavette ou qu'au moins une partie des secteurs (25 à 28) de la deuxième couche de matière (21) est approximativement en forme de rectangle.

5. Élément structurel selon l'une quelconque des revendications 1 à 4, **caractérisé en ce que** les secteurs (25 à 28) de la deuxième couche de matière (21) s'étendent, au moins dans l'état replié, avec un axe articulé (23) parmi ses axes articulés (22, 23, 24), de façon oblique par rapport à au moins un axe articulé (17) parmi les axes articulés (16 à 18) de la première couche de matière (11), de préférence que la largeur des secteurs (25 à 28) de la deuxième couche de matière (21) diminue en direction du centre de pivotement (19).

6. Élément structurel selon l'une quelconque des revendications 1 à 5, **caractérisé en ce que** les secteurs (12 à 15) de la première couche de matière (11) sont respectivement approximativement réalisés en forme de rectangle ou sont respectivement approximativement en forme de triangle ou en forme de trapèze.

7. Élément structurel selon l'une quelconque des revendications 1 à 6, **caractérisé en ce que** la distance mesurée approximativement à angle droit par rapport au plan de dépliage de l'élément structurel (10) des axes articulés (16, 18 et 17) opposés diminue de la première couche de matière (11), dans l'état déplié de l'élément structurel (10), en partant du centre de pivotement (19), jusqu'à la bordure extérieure (29) opposée (angle β).

8. Élément structurel selon l'une quelconque des revendications 1 à 7, **caractérisé en ce que** les axes articulés (16 à 18) de la première couche de matière (11) s'étendent en forme d'arc, dans l'état déplié de l'élément structurel (10), au moins sur une partie de leur longueur totale, notamment qu'ils comportent, en partant du centre de pivotement (19) jusqu'à la bordure (29) opposée, une courbe arquée augmentant en direction de la bordure (29).

9. Élément structurel selon l'une quelconque des revendications 1 à 8, **caractérisé en ce qu'**au moins une partie des axes articulés (16, 18 et 22, 24) directement connexes de la première couche de matière (11) et de la deuxième couche de matière (21) sont reliés entre eux de façon coulissante au moins sur une partie de leur longueur totale en partant de la bordure extérieure (29) jusqu'au centre de pivotement (19) et/ou sont disposés de façon entièrement non reliée les uns par rapport aux autres.

10. Élément structurel selon l'une quelconque des revendications 1 à 9, **caractérisé en ce que** sur le côté de largeur de la deuxième couche de matière (21) opposé à la première couche de matière (11), une troisième couche de matière, par exemple une couche de protection, est prévue, et de préférence qu'une quatrième couche de matière est prévue sur le côté de largeur de la première couche de matière (11) opposé à la deuxième couche de matière (21), cette quatrième couche étant de préférence réalisée et disposée de façon correspondante avec la deuxième couche de matière (21).

11. Élément structurel selon l'une quelconque des revendications 1 à 10, **caractérisé en ce que** les couches de matière (11, 21 et autres) sont coutourées, avec leur région de bordure (29) s'éloignant du centre de pivotement (19) de façon préconisée, par exemple découpées, en formant des courbes de bordure en forme d'arc /ou en ligne droite et/ou de pointes ou leur équivalent.

12. Élément structurel selon l'une quelconque des revendications 1 à 11, **caractérisé en ce qu'**au moins la deuxième couche de matière (21) est réalisée sous la forme d'au moins un élément fonctionnel, par exemple d'un support d'information, d'un élément réfléchissant, d'un élément d'éclairage, d'un élément solaire, d'un élément de projection ou de leur équivalent ou est réalisé sous la forme d'un élément de support pour au moins un moyen fonctionnel, par exemple pour des cellules solaires, des éléments d'éclairage, des éléments d'information, des éléments réfléchissants ou de leur équivalent.

13. Élément structurel selon l'une quelconque des revendications 1 à 12, **caractérisé en ce que** des actionneurs (58 à 62) sont disposés entre deux couches de matière (11, 21), par exemple la première couche de matière (11) et la deuxième couche de matière (21), ces actionneurs pouvant être activés pour déplier et/ou replier les couches de matière (11, 21), notamment en étant alimentés en moyen de pression.

14. Élément structurel selon l'une quelconque des revendications 1 à 13, **caractérisé en ce qu'**au moins une partie des secteurs (12 à 15) de la première couche de matière (11) est réalisée sous la forme d'accumulateurs mécaniques d'énergie pouvant être chargés en énergie par déformation élastique lors du dépliage de l'élément structurel (10), cette énergie pouvant être utilisée pour replier au moins en partie les secteurs entre eux.

15. Élément structurel selon l'une quelconque des revendications précédentes ou plusieurs d'entre elles, **caractérisé en ce que** les secteurs (25 à 28) de la deuxième couche de matière (21) sont reliés le long de la région de bordure s'étendant des deux côtés des axes articulés (22, 24), au moins en partie de façon plane avec la première couche de matière (11).
